# EUROPÄISCHE PATENTSCHRIFT

(11) **EP 3 133 015 B1**
(45) Veröffentlichungstag und Bekanntmachung des Hinweises auf die Patenterteilung: **23.05.2018**
(21) Anmeldenummer: 16183355.3
(22) Anmeldetag: 09.08.2016
(51) Int. Cl.: B64D 1/02, B64D 1/22, B64D 9/00, F16F 13/00

(54) **LASTENHAKENUNTERBAUKONSTRUKTION**
LOAD HOOK SUBSTRUCTURE
SOUS-STRUCTURE DE CROCHET DE CHARGE

(30) Priorität: 21.08.2015 CH 12102015
(43) Veröffentlichungstag der Anmeldung: 22.02.2017
(73) Patentinhaber: Marenco Swisshelicopter AG, 8753 Mollis (CH)
(72) Erfinder: Stucki, Martin, 8330 Pfäffikon (CH); Donno, Cosimo, 8422 Pfungen (CH)
(74) Vertreter: Schneider Feldmann AG Patent- und Markenanwälte

(56) Entgegenhaltungen:
- EP-A2- 2 543 594
- WO-A1-01/74143
- GB-A- 1 307 769
- US-A- 3 068 034
- US-A- 3 176 939
- US-A- 3 677 507

## Beschreibung

### Technisches Gebiet

Die vorliegende Erfindung beschreibt eine Lastenhakenunterbaukonstruktion zur Befestigung an oder in einer Kabinenstruktur eines Helikopters, umfassend ein Gehäuse, in welchem ein Schaft mit Hakenbefestigungsmitteln gelagert ist, sodass ein Lastenhaken mit dem Schaft und damit mit der Lastenhakenunterbaukonstruktion verbindbar ist.

### Stand der Technik

Helikopter werden unter anderem auch für Lastenflüge eingesetzt, wobei ein Frachtgut, ausserhalb der Helikopterkabine gelagert, vom Helikopter von A nach B transportiert wird. Als Last kann unterschiedliches Material für unterschiedliche Bau- oder Wartungsarbeiten transportiert werden oder bei Rettungsflügen eine Trage mit Lebewesen. Ausserhalb des Helikopters, direkt an dessen Kabinenunterseite, wird in der Regel ein fernbedienbarer Lastenhaken mit oder ohne Lastenseil angeordnet, wobei Zugkräfte während des Lastenfluges direkt vom Lastenhaken auf die Kabinenunterseite übertragen werden. Eine solche Konstruktion ist eine einfache und kostengünstige Lösung, wobei der Lastenhaken bei Nichtgebrauch einfach entfernbar ist. Der Lastenhaken bzw. eine Lastenhakenunterbaukonstruktion, an welcher der Lastenhaken befestigt ist, kann geringe Schwenkbewegungen der Last während des Fluges mitmachen, die Bewegungsmöglichkeiten sind aber konstruktionsbedingt eingeschränkt und ein solcher Aufbau ist eher starr.

Es sind weitere Ausführungsformen bekannt, bei denen der Lastenhaken an einer gesonderten Lastenhakenunterbaukonstruktion befestigt ist. Die Lastenhakenunterbaukonstruktion ist dabei von der Helikopterkabine in Richtung Kufen wegragend angeordnet und damit von der Helikopterkabinenunterseite beabstandet. Der Lastenhaken an einer solchen Lastenhakenunterbaukonstruktion kann entsprechend konstruktionsbedingt weiter verschwenkt werden und ein solches System weist eine geringe Flexibilität auf. Die Lastenhakenunterbaukonstruktion in Form eines Befestigungsrahmens ist an Befestigungsstellen an der Kabinenunterseite verschraubt und kann bei Nichtgebrauch samt Lastenhaken ebenfalls entfernt werden. Derartige Befestigungsrahmen sind aber sperrig und weisen schlechtere aerodynamische Eigenschaften auf. Neben den höheren Kosten eines solchen Befestigungsrahmens sind das höhere Gewicht und aufgrund der mechanischen Konstruktion notwendige Wartungsarbeiten nachteilig.

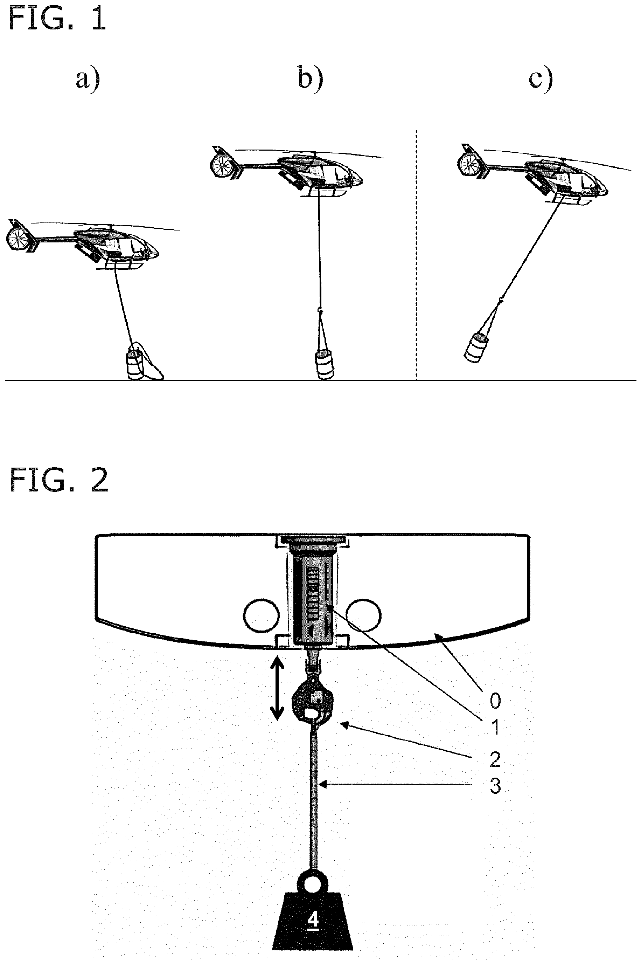

Während eines Lastenfluges wirken unterschiedlich starke Zugkräfte auf den Lastenhaken und indirekt auf die Kabinenunterseite. Im Schwebeflug des Helikopters wird üblicherweise eine Last befestigt, wie in Figur 1a) gezeigt. Die Last ruht auf dem Boden und während der Helikopter langsam abhebt, wird das Lastenseil aufgrund der Zugkraft der Last gespannt. Wie in Figur 1b) gezeigt wirkt eine maximale Zugkraft auf den Lastenhaken und damit die Helikopterkabine, sobald die Last vom Boden abhebt. Diese Belastungsspitzen müssen Lastenhaken, Lastenseil, Lastenhakenunterbaukonstruktion und Helikopterkabine aushalten können. Während des Vorwärtsfluges (Fig. 1c) bzw. während Flugmanövern aller Art mit mitbewegter Last treten Vibrationen auf, wobei die Last mit unterschiedlichen Frequenzen in Richtung Schwerkraft vibriert.

Die bisher verwendeten Lastenhakenunterbaukonstruktionen von Lastenhaken, sowie die Lastenhaken selbst weisen keine bzw. kaum Vorkehrungen auf, um Belastungsspitzen zu reduzieren oder auftretende Vibrationen zu dämpfen. Da das Flugverhalten des Helikopters durch starke Zugkräfte der Lasten und auch von Vibrationen beeinflusst wird, sollten die Belastungsspitzen und Vibrationen möglichst gering gehalten werden.

WO 01/74143 zeigt eine Feder/Dämpfereinheit zum Auffangen von von einer angehängten Last oder von Vibrationen des Hubschraubers herrührenden Belastungsspitzen. Feder und Dämpfer sind insoweit integriert, dass der Federteller auch als Kolben mit begrenzter Öffnung für eine Flüssigkeitsdämpfung dient. Diese bekannte Einheit wird an einem Lasthaken des Hubschraubers fixiert, der selbst in herkömmlicher Weise direkt mit dem Hubschrauber verbunden ist, ohne Zwischenschaltung weiterer Federn bzw. Dämpfer.

### Darstellung der Erfindung

Die vorliegende Erfindung hat sich zur Aufgabe gestellt eine Lastenhakenunterbaukonstruktion eines Lastenhakens für einen Helikopter zu schaffen, welche das Flugverhalten des Helikopters bei Unterlastflügen verbessert.

Belastungsspitzen und Vibrationen auf den Lastenhaken bzw. die Helikopterkabine sollen während eines Lastenfluges stark reduziert werden.

Desweiteren liegt der vorliegenden Erfindung die Aufgabe zugrunde eine kostengünstige einfache nahezu wartungsfreie und aerodynamisch effiziente Lastenhakenunterbaukonstruktion zur Aufhängung eines Lastenhakens zu schaffen.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt unterschiedliche Zuglasten vor dem Abheben (a), im Zustand maximaler Zugspannung auf dem Lastenseil (b) und während des Vorwärtsfluges eines Helikopters (c).
- Figur 2: zeigt eine Aufsicht auf eine Lastenhakenunterbaukonstruktion eingelassen in eine Kabinenstruktur eines Helikopters.
- Figur 3a: zeigt eine perspektivische Ansicht einer Lastenhakenunterbaukonstruktion mit einem hohlzylindrischen Gehäuse und einem Gehäuseflansch, während
- Figur 3b: eine perspektivische Ansicht einer Lastenhakenunterbaukonstruktion mit einem hohlzylindrischen Gehäuse und einer Gehäuseöse zeigt.
- Figur 4a: zeigt eine schematische Schnittansicht einer verbauten hydromechanisch ausgeführten Lastenhakenunterbaukonstruktion in einer entspannten Position, während
- Figur 4b: eine schematische Schnittansicht der Lastenhakenunterbaukonstruktion gemäss Figur 4a in einer gespannten Position zeigt.
- Figur 5a: zeigt einen Längsschnitt einer Lastenhakenunterbaukonstruktion mit einer mechanischen Dämpfungseinrichtung umfassend mehrere Dämpfungselemente, während
- Figur 5b: einen Längsschnitt durch eine Lastenhakenunterbaukonstruktion im Bereich der Dämpfungseinrichtung, umfassend mehrere Dämpfungselemente, die in mehreren Elementstapeln gebündelt angeordnet sind.
- Figur 6a: zeigt eine schematische Explosionsdarstellung der Lastenhakenunterbaukonstruktion gemäss Figur 5a, während
- Figur 6b: eine schematische Explosionsdarstellung der Dämpfungseinrichtung mit zwei Elementstapeln mit jeweils zwei Dämpfungselementen 130 zeigt.
- Figur 7a: zeigt in einem Kräftediagramm die Belastungsspitzen bei hängender Last mit und ohne erfindungsgemässe Lastenhakenunterbaukonstruktion, während
- Figur 7b: ein Kräftediagramm der auftretenden vibrierenden Zugkräfte während des Vorwärtsfluges des Helikopters mit und ohne erfindungsgemässe Lastenhakenunterbaukonstruktion zeigt.

### Beschreibung

In Figur 2 ist eine Kabinenstruktur 0, insbesondere eines Helikopters gezeigt, in welche eine Lasthakenunterbaukonstruktion 1 eingelassen und darin verschraubt befestigt ist. An der Lastenhakenunterbaukonstruktion 1 ist dem der Kabinenstruktur 0 abgewandten Ende ein Lastenhaken 2 angeordnet, an welchem mittels eines Lastenseils 3 eine Last 4 aufgehängt ist. Die Lastenhakenunterbaukonstruktion 1 wird im Folgenden im Detail beschrieben, dabei weist die Lastenhakenunterbaukonstruktion 1 Dämpfungseigenschaften auf, wodurch Belastungsspitzen und Vibrationen auf die Kabinenstruktur 0 enorm reduziert werden.

Die Lastenhakenunterbaukonstruktion 1 weist ein Gehäuse 10 auf, welches an oder in der Kabinenstruktur 0 befestigbar ist. Die gesamte Lastenhakenunterbaukonstruktion 1 kann ausserhalb der Kabinenstruktur 0 hängend bzw. davon wegragend oder wie in Figur 2 in die Kabinenstruktur 0 eingelassen befestigt sein.

Dabei kann die Gehäuseabschlusswand 100 als Gehäuseflansch 100 ausgestaltet sein, mittels welchem das Gehäuse 10 an oder in der Kabinenstruktur 0 befestigt werden kann. An der Gehäuseabschlusswand 100' kann aber auch eine Gehäuseöse 101 angebracht oder angeformt sein, mittels welcher das Gehäuse 10 an der Kabinenstruktur 0 befestigt werden kann.

Das Gehäuse 10 weist hier beispielhaft eine hohlzylindrische Wand 103 auf. Anstelle einer hohlzylindrischen Wand 103 mit rundem Querschnitt könnte auch eine rohrförmige Wand mit rechteckigem Querschnitt einen Teil des Gehäuses 10 bilden.

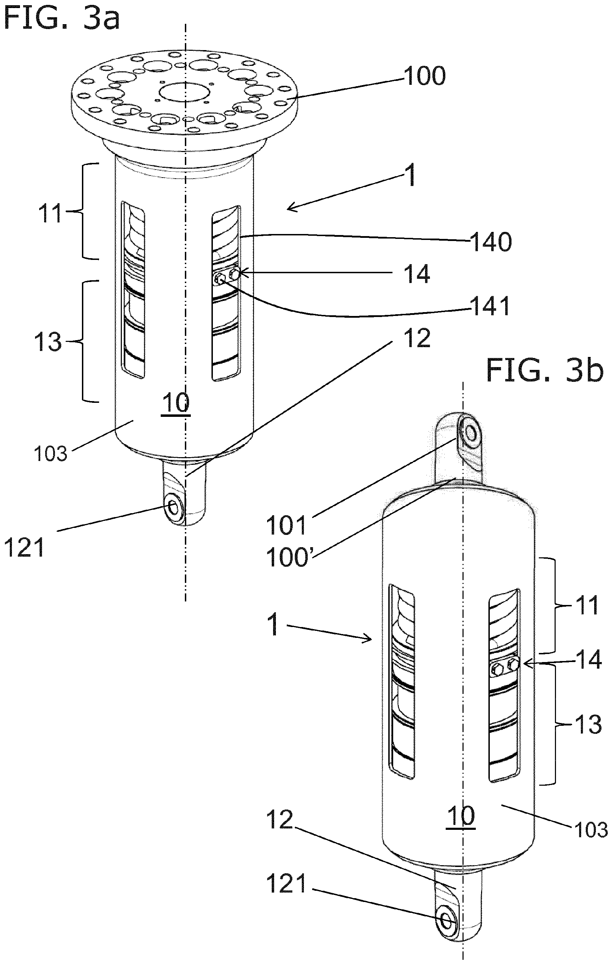

Innerhalb des Gehäuses 10, im von der hohlzylindrischen Wand 103 umschlossenen Innenraum ist jeweils eine Rückfedereinrichtung 11 und eine Dämpfungseinrichtung 13 angeordnet, wobei beide Einrichtungen 11, 13 von einem Schaft 12 in Längsrichtung durchsetzt werden. An dem, der Gehäuseöse 101 bzw. dem Gehäuseflansch 100 gegenüberliegenden Ende des Schafts 12 ist ein Hakenbefestigungsmittel 121 angeordnet bzw. am Schaft 12 angeformt. Hier ist eine Öse als Hakenbefestigungsmittel 121 ausgestaltet, an welcher der Lastenhaken 2 befestigbar ist. Der Schaft 12 ist in Längsrichtung linear auslenkbar, wobei in den Figuren 3a und 3b jeweils die unausgelenkte Position des Schafts 12, welcher das Gehäuse 10 quert, dargestellt ist. Während die Lastenhakenunterbaukonstruktion 1 gemäss Figur 3a an oder in einer Kabinenstruktur 0 direkt befestigbar ist, kann die Lastenhakenunterbaukonstruktion 1 gemäss Figur 3b auch mittels Seil und damit mittelbar an der Kabinenstruktur 0 befestigt werden.

Damit die Lastenhakenunterbaukonstruktion 1 vor übermässiger Belastung geschützt wird, ist eine Verdrehsicherung 14 vorgesehen. Eine solche Verdrehsicherung 14 kann aus mindestens einem Längsschlitz 140 in der Gehäusewand und Führungsmitteln 141, welche direkt oder indirekt am Schaft 12 befestigt sind, bestehen. Hier sind mehrere Längsschlitze 140 angeordnet, in welchem ein Balken, der mit zwei Schrauben am Schaft 12 fixiert ist, eine verdrehgesicherte Linearbewegung ermöglicht.

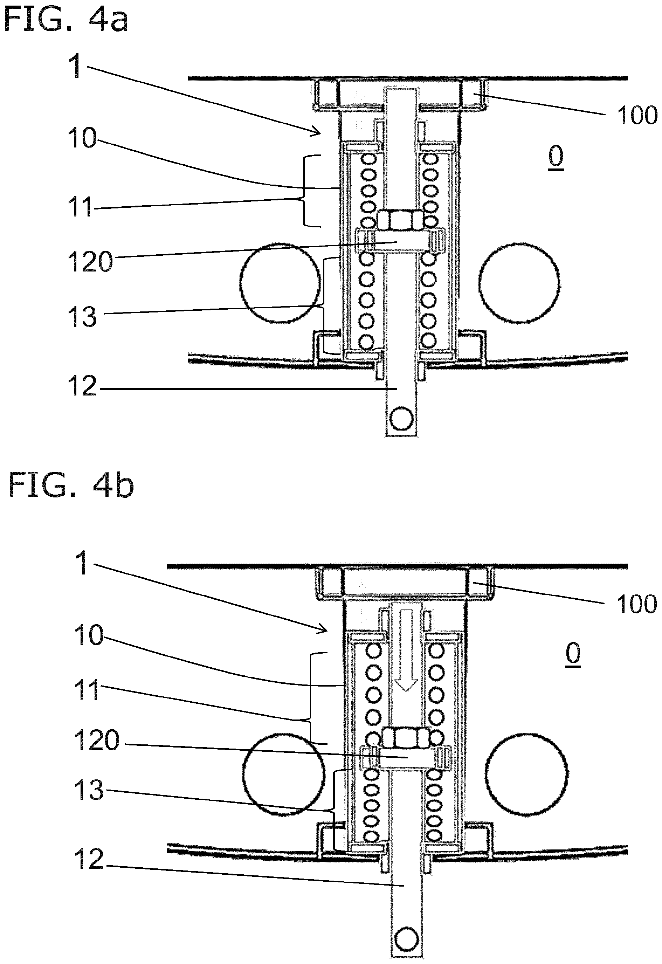

Ebenfalls im nicht ausgelenkten Zustand befindet sich der Schaft 12 der Lastenhakenunterbaukonstruktion 1 gemäss Figur 4a. In dieser teilweise geschnitten dargestellten Ansicht sind entsprechend auch die Rückfedereinrichtung 11 und die Dämpfungseinrichtung 13 entspannt bzw. nicht ausgelenkt dargestellt. In dieser hier dargestellten Ausführungsform ist das Gehäuse 10 fluiddicht ausgeführt und mit einem nicht dargestellten Fluid gefüllt, üblicherweise wird dazu ein Öl verwendet. Damit ist sogar eine hydromechanische Ausführung erreicht, welche allerdings höhere Anforderungen an die Gehäusegestaltung und die Durchführung stellt. Die Rückfedereinrichtung 11 sowie die Dämpfungseinrichtung 13 weisen hier jeweils eine Feder auf. Die Feder der Dämpfungseinrichtung 13, als Dämpfungselement, ist zwischen einem Dämpfungsteller 120 und einem unteren Gehäusedeckel angeordnet, während die Feder der Rückfedereinrichtung 11 zwischen dem Dämpfungsteller 120 und einem oberen Gehäusedeckel dem Gehäuseflansch 100 zugewandt angeordnet ist. Die Rückfedereinrichtung 11 zieht einen unbelasteten Schaft 12 in die unausgelenkte Position. Wird der Schaft 12 auf Zug belastet, so wird der Schaft 12 samt Dämpfungsteller 120 nach unten, also vom Gehäuseflansch 100, abgewandt ausgelenkt, wodurch die Feder der Dämpfungseinrichtung 13 gestaucht wird. Bei Zugbelastung kann so eine Dämpfung erreicht werden, indem der Dämpfungsteller 120 die Dämpfungseinrichtung 13 bis zu einem bestimmten Grad staucht.

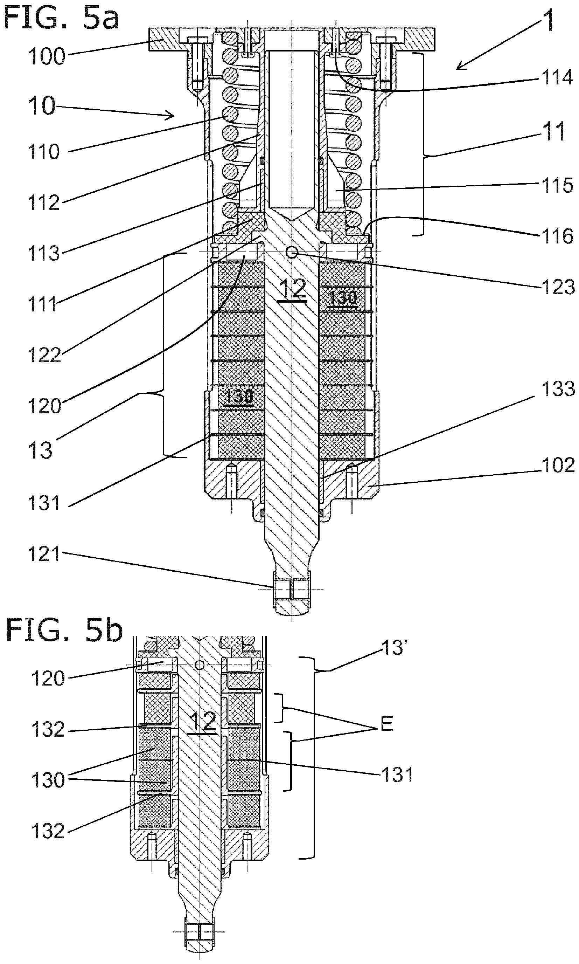

In Figur 5a ist eine Lastenhakenunterbaukonstruktion 1 gezeigt, welche eine mechanische Dämpfungseinrichtung 13 aufweist. In einem, mit einem Gehäuseflansch 100 einseitig verschlossenen, Gehäuse 10 ist der Schaft 12 linear parallel zur Längsachse bewegbar gelagert. Mittels Gehäuseflansch 100 wird der Innenraum des Gehäuses 10 zum einen verschlossen, zum anderen kann die Lastenhakenunterbaukonstruktion 1 mittels Gehäuseflansch 100 an der Kabinenstruktur 0 befestigt werden, was hier nicht dargestellt ist.

Die Rückfedereinrichtung 11 ist an der Gehäuseabschlusswand 100 befestigt und umfasst eine Schaftführungshülse 112. Die Schaftführungshülse 112 ist durch Befestigungsmittel 114 an der Innenfläche des Gehäuseflansches 100 befestigt. In die Schaftführungshülse 112 hineinragend ist der Schaft 12 angeordnet, welcher hier teilweise hohl ausgestaltet ist. Der Schaft 12 ist linear bewegbar durch ein erstes Schaftlager 113 im Hülseninnenraum geführt.

Auf der Aussenseite des Schaftes 12 befindet sich ein Federteller 111, welcher durch eine umlaufende Schulter 122 des Schaftes 12 gehalten wird. Auf einer Unterlagscheibe 116, die auf der, zur Schaftführungshülse 112 zugewandten Seite des Federtellers 111 liegt ist eine Feder 110 als Druckfeder 110 zwischen Federteller 111 und Gehäuseflansch 100 innerhalb des Gehäuses 10 die Schaftführungshülse 112 und einen Teil des Schafts 12 umgebend gelagert und dazwischen wirkverbunden. Die Feder 110 ist direkt oder indirekt an der Gehäuseabschlusswand 100 und am Schaft 12 befestigt. Durch Federaufspreizmittel 115 an der Schaftführungshülse 112 ist gewährleistet, dass die Feder 110 die Schaftführungshülse 112 und damit den Schaft 12 im Bereich der Rückfedereinrichtung 11 umgibt.

Der Schaft 12 weist einen Dämpfungsteller 120 auf, wobei der Dämpfungsteller 120 angeformt oder am Schaft 12 mittels Tellerbefestigungsmittel 123 befestigt sein kann. Hier ist ein Tellerbefestigungsmittel 123 in Form einer Bohrung im Schaft 12 vorgesehen, in welche eine Schraube einbringbar ist, womit der Dämpfungsteller 120 lösbar am Schaft 12 befestigt werden kann.

An den Dämpfungsteller 120 anschliessend ist mindestens ein Dämpfungselement 130 am Schaft 12 im Gehäuseinnenraum zwischen Dämpfungsteller 120 und einer Gehäusewand 102, an der vom Gehäuseflansch 100 abgewandten Seite des Gehäuses 10, angeordnet. Der Schaft 12 quert auf der von der Schaftführungshülse 112 abgewandten Seite ein zweites Lager 133 und die Gehäusewand 102 und tritt dann aus dem Gehäuse 10 aus. An den Hakenbefestigungsmitteln 121 kann eine Last 4 einfach am Schaft 12 befestigt werden.

In Figur 5a sind mehrere Dämpfungselemente 130, insbesondere in Ringform geschichtet gewählt. Diese Dämpfungsringe 130 sind aus einem flexiblen Material gebildet und mindestens teilweise elastisch verformbar. Zur Steigerung der Stabilität sind hier Verstärkungswände 131 vorgesehen, welche ebenfalls ringförmig ausgestaltet sind und mit jeweils mindestens einem Dämpfungsring 130 verbunden sind. Um eine optimale Stabilität zu erreichen, kann jedes Dämpfungselement 130 beidseitig in Richtung der Längsachse von einer Verstärkungswand 131 umgeben sein. Optional kann auch eine Verstärkungswand 131 zwischen dem äusseren Dämpfungselement 130 und dem Dämpfungsteller 120 bzw. zwischen äusserem Dämpfungselement 130 und der unteren Gehäusewand 102 angeordnet sein.

Im Betriebszustand bzw. belasteten Zustand, wenn eine Last 4 mittels befestigtem Lastenhaken 2 am Schaft 12 eine Zugkraft nach unten bewirkt, wird der Schaft 12 nach unten in Richtung Last 4 gezogen, wobei der Dämpfungsteller 120 die zwischen Dämpfungsteller 120 und Gehäusewand 102 liegenden Dämpfungselemente 130 komprimiert oder staucht. Je nach Elastizität der Mehrzahl von Dämpfungselementen 120 ist eine Dämpfung bzw. Federung bei Zugbelastung des Schaftes 12 erreichbar. Der Schaft 12 führt eine lineare Bewegung relativ zur Schaftführungshülse 112 im Gehäuseinnenraum durch, wobei er bis zu einem Anschlag aus dem Gehäuse 10 austreten kann. Die Dämpfungseinrichtung 13 sorgt für eine Dämpfung dieser linearen Zugbewegung.

In einer leicht abgewandelten Dämpfungseinrichtung 13' werden mehrere Dämpfungselemente 130, welche wiederum als Dämpfungsringe ausgestaltet sein können, in mehreren Elementstapeln E, umfassend ein oder mehrere Dämpfungselemente 130, angeordnet. Jeder Elementstapel E wird von einem Stapelhalter 132 gehalten und umfasst mindestens ein Dämpfungselement 130. In Figur 5b ist ein Beispiel mit vier Elementstapeln E gezeigt, wobei drei Elementstapel E ein Dämpfungselement 130 und ein Elementstapel E zwei Dämpfungselemente 130 aufweist. Wahlweise kann auch hier eine Verstärkungswand 132 zwischen zwei in Richtung Längsachse benachbarten Dämpfungselementen 130 zur Stabilisierung angeordnet sein. Bei einer Zugbelastung wird der Schaft 12 nach unten gezogen, wobei der Dämpfungsteller 120 auf die Elementstapel E einwirkt. Dabei werden die Stapelhalter 132 durch den Dämpfungsteller 120 nach unten Richtung Last 4 gedrückt wobei eine elastische Verformung der Dämpfungselemente 130 und damit eine Dämpfung der Zugkraft erreicht wird. Mindestens eine Seitenwand des Stapelhalters 132 dient hier als Anschlag, der ein weiteres Komprimieren der Dämpfungselemente 130 im jeweiligen Elementstapel E verhindert.

Die Führung des Schafts 12 im ersten Schaftlager 113 und im zweiten Schaftlager 133 sorgt für eine rein lineare Bewegung. Die verwendeten Dämpfungselemente 130 können aus dem gleichen oder unterschiedlichen Material geformt sein. Die Stapelhalter 132 sind vorzugsweise aus Metall und damit biegesteif ausgeführt. Die Stapelhalter 132 sollten starrer und biegesteifer als die Dämpfungselemente 130 ausgebildet sein.

Die Dämpfungselemente 130 sind elastisch verformbar bzw. komprimierbar ausgestaltet, sodass eine dämpfende bzw. federnde Wirkung erzielt werden kann, wenn der Schaft 12 von der Kabinenstruktur 0 weg ausgelenkt wird.

Durch die Rückfedereinrichtung 11 der Lastenhakenunterbaukonstruktion wird der Schaft 12 bei Wegnahme der Last wieder in den entspannten Grundzustand innerhalb der Schaftführungshülse 112 bzw. des Gehäuses 10 gezogen. Diese Rückfederung ist durch die Feder 110 wie oben beschrieben erreichbar.

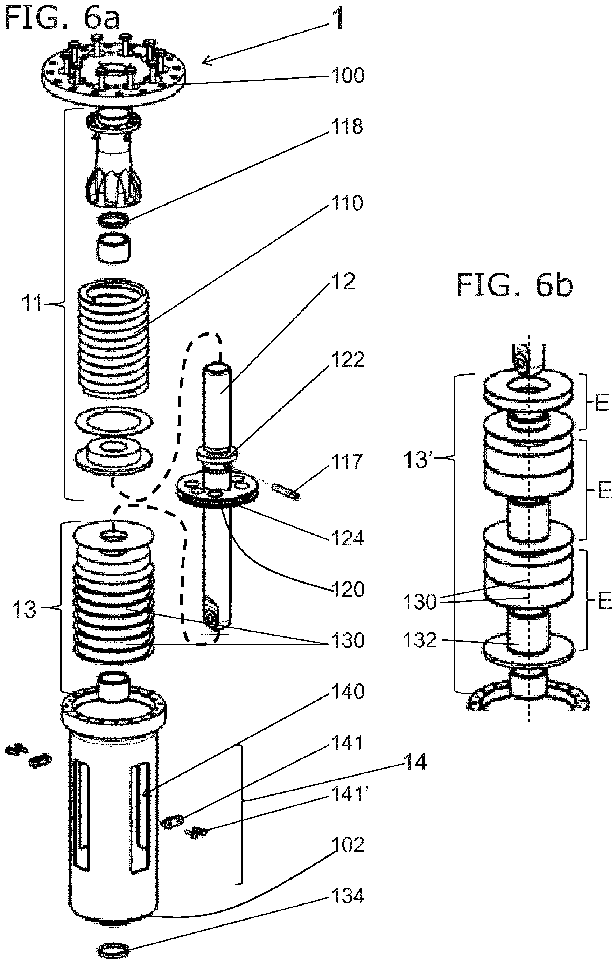

In der Explosionsdarstellung gemäss Figur 6a ist eine Dämpfungseinrichtung 13 mit einer Mehrzahl von Dämpfungselementen 130 in Form von Dämpfungsringen gemäss Figur 5a gezeigt. Die einzelnen Bauteile können ineinander gesteckt werden, wobei ein O-Ring 118 im Bereich der Rückfedereinrichtung 11 im Gehäuseinneren und ein O-Ring 134, der in der Gehäusewand 102 zu liegen kommt, verwendet werden. Ein Federhaltestift 117 hält die Feder 110 im vollständigen Aufbau in Position. Die einzelnen Dämpfungselemente 130 sind zwischen Dämpfungsteller 120 und Gehäusewand 102 elastisch verformbar angeordnet.

Damit der Schaft 12 eine rein lineare Bewegung durchführt ist die Verdrehsicherung 14 vorgesehen. Diese Verdrehsicherung 14 verhindert eine Rotation des Schaftes 12 um die Längsachse. Hier ist die Verdrehsicherung 14 ebenfalls durch mindestens einen Längsschlitz 140 in der Gehäuseseitenwand ausgestaltet, in welchem die Führungsmittel 141, 141' linear geführt bewegbar sind. Das Führungsmittel 141 ist hier als Balken ausgebildet, welcher mittels mindestens einer Schraube 141' am Umfang des Dämpfungstellers 120 in einer Führungsmittelaufnahme 124 befestigt ist. Bevorzugt sind zwei Längsschlitze 140 im Gehäuse 10 ausgespart, in welchen die Führungsmittel 141 bewegbar sind.

Durch Anordnung der Längsschlitze 140 können die Bauteile nach dem Ineinanderstecken einfach verschraubt werden. Durch Anordnung der Führungsmittel 141 wird gewährleistet, dass der Schaft 12 eine ausschliesslich lineare Bewegung durchführen kann. Natürlich sind andere Ausgestaltungen der Verdrehsicherung möglich. Vor allem, wenn eine hydromechanische Dämpfungseinrichtung 13 mit fluiddichtem Gehäuse 10 gewünscht ist, muss die Verdrehsicherung anders gelöst sein.

In Figur 6b ist eine Explosionsdarstellung einer Dämpfungseinrichtung 13' mit zwei Elementstapeln E mit jeweils zwei Dämpfungselementen 130, welche jeweils auf einem Stapelhalter 132 angeordnet sind, gezeigt. In einer bevorzugten Ausführungsform der Lastenhakenunterbaukonstruktion, ist die Querschnittsfläche des Schaftes 12 mehreckig ausgeführt, wodurch eine einfache Verdrehsicherung erreichbar ist.

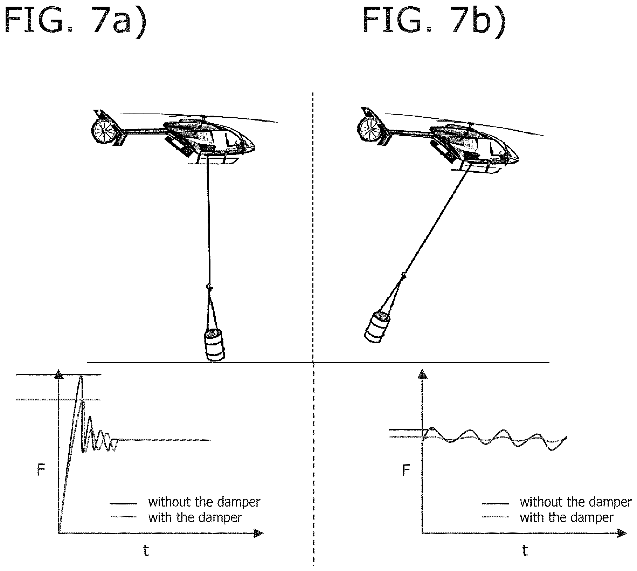

Der erreichbare Effekt im Betrieb, also bei Verwendung der Lastenhakenunterbaukonstruktion 1 bei einem Unterlastflug ist in den Figuren 7a und 7b gezeigt. Dabei sind Messwerte in Kraft-Zeit-Diagrammen bei unterschiedlichen Manövern aufgetragen.

Im ersten Zustand, bei unter dem Helikopter hängender Last bei auftretender Belastungspitze ist der Unterschied im Kräftediagramm bei Verwendung der erfindungsgemäss dämpfenden Lastenhakenunterbaukonstruktion 1 im Vergleich zur klassischen ungedämpften Lastenhakenunterbaukonstruktion deutlich erkennbar. Die maximale wirkende Zugkraft beim Anheben der Last 4 kann bei Verwendung der gedämpften Lastenhakenunterbaukonstruktion 1 niedriger gehalten werden.

Die beim Vorwärtsflug auftretenden Auslenkungen aufgrund variierender Zugkräfte werden ebenfalls durch zur Hilfenahme der erfindungsgemässen Lastenhakenunterbaukonstruktion 1 deutlich gedämpft werden. Wie dargestellt kommt es beim Vorwärtsflug zu periodisch auftretenden Auslenkungen bzw. Schwingungen, dessen Auswirkungen auf die Kabinenstruktur 0 deutlich gedämpft sind.

### Bezugszeichenliste

0 Kabinenstruktur
1 Lastenhakenunterbaukonstruktion
10 Gehäuse
   100 Gehäuseabschlusswand /Gehäuseflansch
   101 Gehäuseöse
   102 Gehäusewand
   103 hohlzylindrische Wand
11 Rückfedereinrichtung
   110 Feder/Druckfeder
   111 Federteller
   112 Schaftführungshülse
   113 erstes Schaftlager in Schaftführungshülse
   114 Befestigungsmittel
   115 Federaufspreizmittel
   116 Unterlagscheibe
   117 Federhaltestift
   118 O-Ring
12 Schaft (verdrehgesichert längsbewegbar gelagert)
   120 Dämpfungsteller
   121 Hakenbefestigungsmittel
   122 Schulter
   123 Tellerbefestigungsmittel
   124 Führungsmittelaufnahme
13 Dämpfungseinrichtung
   130 Dämpfungselemente
   131 Verstärkungswand
   132 Stapelhalter / Stopperabschnitt
   133 zweites Lager
   134 O-Ring
   E Elementstapel
14 Verdrehsicherung
   140 Längsschlitz in Gehäusemantel
   141 Führungsmittel
2 Lastenhaken
3 Lastenseil
4 Last

## Patentansprüche

1. Lastenhakenunterbaukonstruktion (1) zur Befestigung an oder in einer Kabinenstruktur (0) eines Helikopters,
umfassend ein Gehäuse (10), in welchem ein Schaft (12) mit Hakenbefestigungsmitteln (121) gelagert ist, sodass ein Lastenhaken (2) mit dem Schaft (12) und damit mit der Lastenhakenunterbaukonstruktion (1) verbindbar ist,
**dadurch gekennzeichnet, dass**
der Schaft (12) den Innenraum des Gehäuses (10) zwischen einer Gehäuseabschlusswand (100) und einer Gehäusewand (102) in Längsrichtung des Gehäuses querend linear bewegbar durchsetzt und eine Rückfedereinrichtung (11) zwischen einem am Schaft (12) angeordneten Dämpfungsteller (120) und der Gehäuseabschlusswand (100), sowie eine Dämpfungseinrichtung (13) zwischen Dämpfungsteller (120) und der unteren Gehäusewand (102) angeordnet ist, wobei die Dämpfungseinrichtung (13) mindestens ein flexibel komprimierbares Dämpfungselement (130) umfasst, welches bei linearer Bewegung des Schafts (12) eine Dämpfungswirkung entfaltet.

2. Lastenhakenunterbaukonstruktion (1) nach Anspruch 1, wobei eine Mehrzahl von Dämpfungselementen (130) übereinander gestapelt zwischen Dämpfungsteller (120) und unterer Gehäusewand (102) angeordnet ist.

3. Lastenhakenunterbaukonstruktion (1) nach Anspruch 2, wobei Dämpfungselemente (130) in Elementstapeln (E) mit unterschiedlich oder gleichvielen Dämpfungselementen (130) angeordnet sind und jeder Elementstapel (E) in einem Stapelhalter (132) gehalten ist, dessen mindestens eine Seitenwand als Anschlag dient.

4. Lastenhakenunterbaukonstruktion (1) nach Anspruch 3, wobei die Stapelhalter (132) starrer und biegesteifer als die Dämpfungselemente (130) ausgebildet sind.

5. Lastenhakenunterbaukonstruktion (1) nach einem der Ansprüche 2 bis 4, wobei eine Verstärkungswand (131) zwischen benachbarten Dämpfungselementen (130) bzw. zwischen äusserem Dämpfungselement (130) und Dämpfungsteller (120) und/oder unterer Gehäusewand (102) angeordnet ist.

6. Lastenhakenunterbaukonstruktion (1) nach einem der vorhergehenden Ansprüche, wobei die Dämpfungselemente (130) ringförmig, den Schaft (12) umschliessend ausgestaltet sind.

7. Lastenhakenunterbaukonstruktion (1) nach einem der vorhergehenden Ansprüche, wobei die Rückfedereinrichtung (11) eine Feder (110), als Druckfeder (110) ausgeführt, aufweist, welche an der Gehäuseabschlusswand (100) und dem Schaft (12), eine Schaftführungshülse (112) umgebend, gelagert ist.

8. Lastenhakenunterbaukonstruktion (1) nach Anspruch 7, wobei die Druckfeder (110) mittels Federhaltestift (117) mit dem Schaft (12) wirkverbunden ist.

9. Lastenhakenunterbaukonstruktion (1) nach einem der vorhergehenden Ansprüche, wobei der Schaft (12) in einem ersten Schaftlager (113) im Bereich der Rückfedereinrichtung (11) und einem zweiten Lager (133) im Bereich der Dämpfungseinrichtung (13) linear bewegbar geführt ist.

10. Lastenhakenunterbaukonstruktion (1) nach einem der vorhergehenden Ansprüche, wobei die Gehäuseabschlusswand (100) als Gehäuseflansch (100) ausgebildet ist, mittels welchem die Lastenhakenunterbaukonstruktion (1) an oder in einer Kabinenstruktur (0) eines Helikopters anflanschbar ist.

11. Lastenhakenunterbaukonstruktion (1) nach einem der vorhergehenden Ansprüche, wobei an der Gehäuseabschlusswand (100) eine Gehäuseöse (101) angeordnet ist, mittels welcher die Lastenhakenunterbaukonstruktion (1) direkt an oder in einer Kabinenstruktur (0) eines Helikopters bzw. mittelbar über ein Seil an der Kabinenstruktur (0) aufhängbar ist.

12. Lastenhakenunterbaukonstruktion (1) nach einem der vorhergehenden Ansprüche, wobei das Gehäuse (10) eine hohlzylindrische Wand (103) aufweist, welche den Innenraum des Gehäuses (10) und die darin gelagerte Rückfedereinrichtung (11), den Schaft (12) und die Dämpfungseinrichtung (13) umschliesst.

13. Lastenhakenunterbaukonstruktion (1) nach Anspruch 12, wobei eine Verdrehsicherung (14) vorgesehen ist, umfassend mindestens einen in der hohlzylindrischen Wand (103) verlaufenden Längsschlitz (140), in welchem Führungsmittel (141), die am Dämpfungsteller (120) befestigt sind, bewegbar sind.

14. Lastenhakenunterbaukonstruktion (1) nach Anspruch 13, wobei das Führungsmittel (141) als Balken ausgebildet ist, welcher mittels mindestens einer Schraube (141') am Umfang des Dämpfungstellers (120) in einer Führungsmittelaufnahme (124) befestigt ist und durch den Längsschlitz (140) geführt bewegbar ist.

15. Lastenhakenunterbaukonstruktion (1) nach Anspruch 14, wobei der Schaft (12) eine Zugfeder (110) in der Rückfedereinrichtung (11) und eine Feder als Dämpfungselement (130) quert und der von der hohlzylindrischen Wand (103) umgebende Innenraum des Gehäuses (10) mit einem Fluid gefüllt ist, sodass eine hydromechanische Dämpfungswirkung erreicht ist.

## Claims

1. A load hook substructure (1) for purposes of attachment onto or into the cabin structure (0) of a helicopter, comprising a housing (10) in which a shaft (12) with hook attachment means (121) is mounted, such that a load hook (2) can be connected with the shaft (12) and thereby with the load hook substructure (1),
**characterised in that**,
the shaft (12) passes through the interior of the housing (10) in the longitudinal direction between a housing end wall (100) and a housing wall (102), such that it can move linearly, and a return spring device (11) is arranged between a damping plate (120) arranged on the shaft (12) and the housing end wall (100), and a damping device (13) is arranged between the damping plate (120) and the lower housing wall (102), wherein
the damping device (13) comprises at least one flexibly compressible damping element (130), which develops a damping action in the event of a linear movement of the shaft (12).

2. The load hook substructure (1) in accordance with claim 1, wherein
a plurality of damping elements (130), stacked one above another, are arranged between the damping plate (120) and the lower housing wall (102).

3. The load hook substructure (1) in accordance with claim 2, wherein
damping elements (130) are arranged in element stacks (E) with differing or the same numbers of damping elements (130), and each element stack (E) is held in a stack holder (132), at least one sidewall of which serves as a stop.

4. The load hook substructure (1) in accordance with claim 3, wherein
the stack holders (132) are designed to be more rigid and stiffer in bending than the damping elements (130) .

5. The load hook substructure (1) in accordance with one of the claims 2 to 4, wherein
a reinforcing wall (131) is arranged between adjacent damping elements (130), or between an outer damping element (130) and the damping plate (120), and/or the lower housing wall (102).

6. The load hook substructure (1) in accordance with one of the preceding claims, wherein
the damping elements (130) are configured in an annular shape enclosing the shaft (12).

7. The load hook substructure (1) in accordance with one of the preceding claims, wherein
the return spring device (11) has a spring (110) embodied as a compression spring (110), which is mounted on the housing end wall (100) and the shaft (12), surrounding a shaft guidance sleeve (112).

8. The load hook substructure (1) in accordance with claim 7, wherein
the compression spring (110) is operationally connected with the shaft (12) by means of a spring retention pin (117).

9. The load hook substructure (1) in accordance with one of the preceding claims, wherein
the shaft (12) is guided such that it can move linearly in a first shaft bearing (113) in the region of the return spring device (11), and in a second bearing (133) in the region of the damping device (13) .

10. The load hook substructure (1) in accordance with one of the preceding claims, wherein
the housing end wall (100) is designed as a housing flange (100), by means of which the load hook substructure (1) can be flanged onto or into a cabin structure (0) of a helicopter.

11. The load hook substructure (1) in accordance with one of the preceding claims, wherein
a housing eye (101) is arranged on the housing end wall (100), by means of which the load hook substructure (1) can be suspended directly on or in a cabin structure (0) of a helicopter, or indirectly, by means of a cable, on the cabin structure (0).

12. The load hook substructure (1) in accordance with one of the preceding claims, wherein
the housing (10) has a hollow cylindrical wall (103), which encloses the interior of the housing (10) and the therein-mounted return spring device (11), the shaft (12) and the damping device (13).

13. The load hook substructure (1) in accordance with claim 12, wherein
an anti-rotation device (14) is provided, comprising at least one longitudinal slot (140) running in the hollow cylindrical wall (103), in which guidance means (141), which are attached to the damping plate (120), can be moved.

14. The load hook substructure (1) in accordance with claim 13, wherein
the guidance means (141) are designed as a bar, which by means of at least one bolt (141') is attached to the periphery of the damping plate (120) in a guidance means seating (124), and which can move through the longitudinal slot (140) in a guided manner.

15. The load hook substructure (1) in accordance with claim 14, wherein
the shaft (12) passes through a tension spring (110) in the return spring device (11), and a spring as a damping element (130), and the interior of the housing (10) surrounded by the hollow cylindrical wall (103) is filled with a fluid such that a hydromechanical damping action is achieved.

## Revendications

1. Bâti de crochet de charge (1) destiné à être fixé à ou dans une structure de cabine (0) d'un hélicoptère,
comprenant un logement (10) dans lequel est disposée une tige (12) avec des moyens de fixation de crochet (121) de sorte qu'un crochet de charge (2) puisse être relié à la tige (12) et ainsi au bâti de crochet de charge (1),
**caractérisé en ce que** la tige (12) traverse de façon mobile en ligne droite transversale l'intérieur du logement (10) entre une paroi d'extrémité de logement (100) et une paroi de logement (102) dans le sens longitudinal du logement et un dispositif de ressort de rappel (11) est disposé entre une rondelle d'amortissement (120) disposée sur la tige (12) et la paroi d'extrémité de logement (100),
ainsi qu'un dispositif d'amortissement (13) est disposé entre la rondelle d'amortissement (120) et la paroi de logement (102) inférieure, dans lequel le dispositif d'amortissement (13) comprend au moins un élément d'amortissement (130) flexible pouvant être comprimé, lequel déploie un effet d'amortissement lors du mouvement linéaire de la tige (12).

2. Bâti de crochet de charge (1) selon la revendication 1, dans lequel une pluralité d'éléments d'amortissement (130) sont empilés les uns sur les autres entre la rondelle d'amortissement (120) et la paroi de logement (102) inférieure.

3. Bâti de crochet de charge (1) selon la revendication 2, dans lequel des éléments d'amortissement (130) sont disposés en piles d'éléments (E) avec des éléments d'amortissement (130) différents ou peu importe et chaque pile d'éléments (E) est maintenue dans un support de pile (132), dont au moins une paroi latérale est conçue en tant que butée.

4. Bâti de crochet de charge (1) selon la revendication 3, dans lequel les supports de pile (132) sont plus rigides et plus rigides en flexion que les éléments d'amortissement (130).

5. Bâti de crochet de charge (1) selon l'une des revendications 2 à 4, dans lequel une paroi de renfort (131) est disposée entre des éléments d'amortissement voisins (130), respectivement, l'élément d'amortissement extérieur (130) et la rondelle d'amortissement (120) et/ou la paroi de logement (102) inférieure.

6. Bâti de crochet de charge (1) selon l'une des revendications précédentes, dans lequel les éléments d'amortissement (130) sont annulaires, entourant la tige (12).

7. Bâti de crochet de charge (1) selon l'une des revendications précédentes, dans lequel le dispositif de ressort de rappel (11) présente un ressort (110), conçu en tant que ressort de pression (110), qui est disposé sur la paroi d'extrémité de logement (100) et la tige (12), entourant un manchon guide-tige (112).

8. Bâti de crochet de charge (1) selon la revendication 7, dans lequel le ressort de pression (110) est relié activement à la tige (12) au moyen d'une tige de fixation de ressort (117).

9. Bâti de crochet de charge (1) selon l'une des revendications précédentes, dans lequel la tige (12) est dirigée mobile en ligne droite dans un premier palier de tige (113) au niveau du dispositif de ressort de rappel (11) et un deuxième palier de tige (133) au niveau du dispositif d'amortissement (13) .

10. Bâti de crochet de charge (1) selon l'une des revendications précédentes, dans lequel la paroi d'extrémité de logement (100) est conçue en tant que bride de logement (100) au moyen de laquelle le bâti de crochet de charge (1) peut être bridé sur ou dans une structure de cabine (0) d'un hélicoptère.

11. Bâti de crochet de charge (1) selon l'une des revendications précédentes, dans lequel un oeillet de logement (101) est disposé sur la paroi d'extrémité de logement (100), au moyen duquel le bâti de crochet de charge (1) peut être suspendu directement à ou dans une structure de cabine (0) d'un hélicoptère, respectivement indirectement à la structure de cabine (0) par le biais d'un câble.

12. Bâti de crochet de charge (1) selon l'une des revendications précédentes, dans lequel le logement (10) présente une paroi cylindrique creuse (103) qui entoure l'intérieur du logement (10) et le dispositif de ressort de rappel (11) disposé dedans, la tige (12) et le dispositif d'amortissement (13).

13. Bâti de crochet de charge (1) selon la revendication 12, dans lequel une sécurité anti-rotation (14) est prévue, comprenant au moins une fente longitudinale (140) passant dans la paroi cylindrique creuse (103), dans laquelle des moyens de guidage (141) qui sont fixés sur la rondelle d'amortissement (120), sont mobiles.

14. Bâti de crochet de charge (1) selon la revendication 13, dans lequel le moyen de guidage (141) est conçu en tant que barre qui est fixée sur le pourtour de la rondelle d'amortissement (120) dans un logement de moyen de guidage (124) au moyen d'au moins une rondelle (141') et est dirigée mobile à travers la fente longitudinale (140).

15. Bâti de crochet de charge (1) selon la revendication 14, dans lequel la tige (12) traverse un ressort de traction (110) dans le dispositif de ressort de rappel (11) et un ressort en tant qu'élément d'amortissement (130) et l'intérieur du logement (10) entouré de la paroi (103) cylindrique creuse est rempli d'un fluide de sorte qu'un effet d'amortissement hydromécanique est obtenu.
